# EUROPEAN PATENT APPLICATION

(11) **EP 4 556 222 A1**
(43) Date of publication of application: **21.05.2025**
(21) Application number: 24212951.8
(22) Date of filing: 14.11.2024
(51) Int. Cl.: B32B 27/08, B32B 27/10, B32B 27/32, B65D 65/40

(54) **LAMINATED PACKAGING MATERIAL, PACKAGING CONTAINER AND METHODS OF MANUFACTURE THEREOF**

(30) Priority: 20.11.2023 EP 23210991
(71) Applicant: Tetra Laval Holdings & Finance S.A., 1009 Pully (CH)
(72) Inventor: WAHLBERG, Jan, 221 86 Lund (SE); BERLIN, Mikael, 221 86 Lund (SE); TOFT, Nils, 221 86 Lund (SE); ÖHMAN, Peter, 221 86 Lund (SE); ANDERSSON, Håkan, 221 86 Lund (SE)
(74) Representative: Tetra Pak - Patent Attorneys SE

(57) **Abstract**

A non-foil laminated packaging material for heat sealing into packages for liquid or semi-liquid food products comprises:
- a barrier material formed of a barrier substrate layer bearing a vapour-deposited metal layer and a layer of optionally reduced graphene oxide immediately adjacent to the vapour-deposited metal layer; and
- a heat seal layer.

A method of making the laminated packaging material, a packaging container, and a method of forming a packaging container from the laminated packaging material are also described.

## Description

### Technical field

The present invention relates to a laminated packaging material, in particular intended for liquid carton food packaging, and to a method of manufacturing thereof. The invention further relates to liquid carton packaging containers comprising the laminated packaging material, and to methods of forming such containers.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

In recent years, the majority of the producers of food packaging containers are focusing to reach recyclability and sustainability standards promoted by various governments and other institutions, such as the European Union. The objective of these efforts is to deliver a future carton-based packaging container, made to a larger extent of renewable packaging materials, being to a higher degree recyclable, in order to reduce waste and pollution.

However, most producers of the packaging material for forming the packaging containers still integrate a thin foil of aluminum in the packaging material for food protection. A layer of an aluminium foil in the packaging laminate provides gas barrier properties quite superior to most other gas barrier materials. The conventional aluminium-foil based packaging laminate for liquid food aseptic packaging is still the most cost-efficient packaging material, at its level of performance, available on the market today.

As well as the barrier properties of the aluminum, the metal foil is also used as a workpiece to provide various heat seals of the packaging material in order to form closed and sealed packaging containers.

The aluminium foil renders the packaging material thermosealable by inductive thermosealing (also referred to as "induction heat sealing") which is a rapid and efficient sealing technique for obtaining mechanically strong, liquid- and gas-tight sealing joints or seams during the production of the containers. The technique of induction welding is based on Faraday's law, by which an alternating magnetic field generated around a conductor is capable of inducing an electrical current in another conductor placed in close proximity (workpiece). Heat is then generated in the workpiece due to Joule effect. Thus, a magnetic field is used to induce eddy currents in the metal of the aluminum foil. As the foil is heated, thermal energy is transferred by conduction to the plastic laminate layers of the packaging material which then melt and bond to each other. Upon deactivation of the induction heating, the plastic layers re-solidify to provide a correct and durable sealing. Induction heating may be used to provide longitudinal sealing as well as transverse sealing. A good sealing of the package containers ensures a sterile content for the entire lifetime of the product. For packaging materials currently on the market the workpiece is an aluminum foil having a thickness of about 6 microns. In order to provide efficient and robust seals, the inductor is powered by an AC power source generating a variable-voltage/current having a frequency of around 535 kHz.

However, aluminum is not a renewable source, hence the extensive use is in conflict with the previously mentioned goal of renewable and recyclable packages. For this reason, developing a packaging material without aluminum is of ever-growing importance. On the other hand, potential issues may arise in performing efficient sealing of a packaging material that does not include an aluminum foil.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is also a general incentive towards developing pre-manufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings.

Metallised vapour deposition coating layers (also referred to herein as "vapour-deposited metal layers" and "metallisation"; the terms "vacuum-deposited metal layers" and "vacuum-coated metal layers" may also be used) form a good alternative to aluminium foil as they also allow inductive thermosealing, meaning that the packaging laminate is directly suitable for use in existing filling and packaging machines. This is discussed in WO2011/003565 and WO2022/135837 of the applicant. In order to maintain a relatively high induced power to melt the polymer in the package when the workpiece thickness is reduced, the magnetic field frequency must be increased.

However, as such coatings are very thin, they are relatively sensitive to mechanical stress and damage, in comparison to an aluminium foil, and may not be sufficiently robust for fold-forming and sealing of packaging containers. An induction heat susceptible metal layer must be sufficiently homogeneous and continuous in nature to transmit an electrical current as a result of an induced magnetic field, to maintain this current during heating, and to become heated such that an adjacent thermoplastic polymer layer will be heated and melted to provide melt sealing of said polymer. If the metal layer is discontinuous due to uneven coating or due to cracks, there will be no heating provided in parts of the sealing area where defects occur.

There is thus a need for vapour-deposited metal layers having improved thermomechanical properties.

Separately from vapour-deposited metal layers, graphene has emerged as a potential barrier material. Carbon-containing materials such as graphene have the further advantage that they can be used in induction sealing of packages, as disclosed in WO2021/005120 of the applicant.

A much cheaper source of material for a similar barrier coating with equal or similar properties to graphene would be graphene oxide flakes or particles which have been exfoliated from graphite oxide as a very cheap raw material, and subsequently chemically reduced. Graphite is abundantly available in nature and thus graphene obtainable via oxidation to graphite oxide/ graphene oxide (e.g. by a process called Hummers' method) and subsequent reduction to reduced graphene oxide would be considerably less expensive to use in packaging materials. Formation of such reduced graphene oxide coatings is discussed in WO2022/136450, WO2022/136463 and European Patent Application No. 22174562.3 (unpublished) of the applicant.

### Summary of the invention

In a first aspect, the invention relates to a non-foil laminated packaging material for heat sealing into packages for liquid or semi-liquid food products, the laminated packaging material comprising:
- a barrier material formed of a barrier substrate layer bearing a vapour-deposited metal layer and a layer of optionally reduced graphene oxide immediately adjacent to the vapour-deposited metal layer; and
- a heat seal layer.

Preferably, the vapour-deposited metal layer is induction heat susceptible, and the laminated packaging material is suitable for induction heat sealing.

Graphene oxide and reduced graphene oxide (the term "(reduced) graphene oxide" is also used herein to refer to graphene oxide and/or reduced graphene oxide) provide inherent durability and flexibility and are not sensitive to cracking upon strain. They thus provide thermomechanical support to the vapour-deposited metal layer during heat treatments such as sealing (e.g. induction heat heating, such as high frequency induction heating) or lamination of the barrier layer to other laminate layers. This can be seen in induction heat sealing as increased power endurance i.e. ability to keep the vapour-deposited metal layer intact and without cracks during heating at a higher power and/or for a longer time, allowing for higher seal quality.

Both reduced and non-reduced graphene oxide also provide light barrier properties.

The heat seal layer may be an innermost layer, such as an innermost heat sealable layer, also may be referred to as innermost liquid tight material layer, and/or an outermost layer, such as an outermost heatsealable layer, also may be referred to as outermost protective material layer.

Reduced graphene oxide also provides good gas barrier properties to oxygen and water vapour because of tight layering of flakes overlapping each other, such that any permeation of oxygen molecules through the coating has to follow a tortuous path between the flakes. Reduced graphene oxide typically retains its oxygen gas barrier properties well during formation into packages. The gas barrier property of reduced graphene oxide is not sensitive to moisture and permeation of water vapour from the liquid contents of the package, and therefore will endure long term storage of such filled packaging containers.

The layers of the barrier material may be arranged with either the vapour-deposited metal layer or the layer of optionally reduced graphene oxide towards the barrier substrate layer.

The oxygen barrier transmission values of the laminated packaging material may be as low as 1 cc/m², 24h, 1 atm, 23°C / 50% RH, 21 % oxygen.

### Detailed description

### Definitions

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may cause deterioration of the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container.

Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

The term "non-foil" in connection with a packaging material means that the packaging material does not comprise an aluminium foil of a thickness in the micrometer-scale, such as conventional aluminium foils for liquid carton packaging which are normally from 6 to 9 µm thick. A "non-foil" packaging material may comprise a vapour-deposited metal layer, however, as the thickness of e.g. an aluminium vapour-deposited metal layer is in the nano-meter scale. The amount of aluminium material employed in such a vapour-deposited metal layer is very low, and has, in comparison to aluminium foils, a significantly reduced impact on recycling and exploitation of material resources.

The term "thermomechanical stability" in connection with a material or a material layer means that the material has the ability to maintain mechanical stability and geometry at elevated temperatures, including during shaping or forming the material (such as pressing, folding, heat sealing), such that the vapour-deposited metal layer is well supported by such a material or layer and does not deteriorate. Furthermore, the material will not melt or soften upon heating to pre-determined tem peratures.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

The term "graphene oxide" includes monolayer flakes of graphene oxide and multilayer graphene oxide platelets, having up to 20, such as 2-10, stacked monolayer flakes of graphene oxide. Only smaller amounts, i.e. lower than 15 wt%, such as lower than 10 wt%, such as lower than 5 wt%, based on dry weight of the graphene oxide material, may be graphite oxide flakes that have been exfoliated to a number of graphene oxide monolayer flakes higher than 20, but which have a smaller lateral particle size than bulky graphite oxide particles, i.e. so-called "graphite oxide nano-platelets", which are thus still nano-sized. Such smaller amounts of such laterally nano-sized graphite flakes may be present as long they do not reduce the performance of the graphene-based material too much.

Suitable graphene oxide materials for aqueous dispersions, useable for the present invention, are e.g. a pure quality, exfoliated to at least 95 %, from Graphenea, or paste graphene oxide from LayerOne Advanced Materials, Norway.

The term "reduced graphene oxide" refers to material which has been produced from graphene oxide by reduction. Typically the material remains partially oxidised, and so is distinguished from graphene. The level of reduction can be observed by X-ray diffraction (https://www.sciencedirect.com/topics/materials-science/x-ray-diffraction-analysis). After the complete reduction of GO, the GO XRD peak is expected to shift from ~12° to 25°, indicating the collapse of the interlayer spacing from 0.7 to 0.36 nm.

The term "workpiece" refers a portion or layer configured to generate heat losses by means of a magnetic field produced by an electromagnetic device, such as an inductor.

A heat seal is a joint between two opposing polymer material surfaces, where the materials have been welded or joined together by heating the polymer material surface while pressing together, such that the two opposing surfaces of polymer material were locally melted and the respective molecules forced to inter-diffuse with each other, under the application of simultaneous heat and pressure. This means that the polymer molecules of the two polymer materials became more mobile under the influence of heat, i.e. that the molten polymer surfaces could "inter-diffuse" with each other before immediately being cooled down again while in the inter-diffused (fused, inter-dispersed) state.

### Barrier Substrate

Suitable barrier substrates include polymer films as well as papers, paperboard or other cellulose-based substrates (herein referred to collectively as "paper barrier substrates").

Polymer film substrates may be polyolefins. Typical polyolefin films may be made of a majority of polypropylene or polyethylene. Alternatively, the polymer film substrate may be a polyester e.g. polyethylene terephthalate (PET). Polyester films provide good thermomechanical stability but are less preferred for recycling purposes.

The polymer film substrate may be unoriented, mono-axially oriented or biaxially oriented. Preferred materials include mono-axially or biaxially oriented polypropylene (OPP or BoPP), mono-axially or biaxially oriented polyethylene (MoPE or BoPE), such as biaxially oriented linear low density polyethylene (BoLLDPE), biaxially oriented high density polyethylene (BOHDPE), and unoriented HDPE or LLDPE. Cast or blown such substrate films may be used. Preferably the mono-axially oriented substrate film has a stretch ratio from 3 to 12, more preferably 4 to 8, in the machine direction (MD). In the alternative embodiment where the film is biaxially oriented, a suitable stretch magnification ratio (i.e. stretch ratio in MD : stretch ratio in cross direction) is 3 to 12, preferably 5 to 12.

The polymer film may comprise filler and/or may be a cavitated film, such as cavitated OPP.

Suitably, the thickness of the substrate film is 10 to 30 µm, more preferably 15 to 25 µm, e.g. 16, 18, 20 or 23 µm. It is important to the openability of a laminated packaging material that the substrate film not be too thick, whilst still providing good mechanical properties. This is particularly the case for oriented films. A thin film is also desirable to minimise the polymer content of the laminate.

For polymer film barrier substrates, a skin layer may be present. The skin layer may be co-extruded with the core layer of the polymer barrier substrate, or may be coated onto the core layer. The skin layer may subsequently be oriented with the core layer.

The polymer film barrier substrate suitably has a melting point higher than that of the heat seal layer, for example higher than 120 °C, such as higher than 125 °C.

Cellulose-based substrates may be based on any type of native cellulose, fibrous or fibrillar cellulose.

Normally, a suitable paper or cellulose-based substrate material for carrying the barrier coating of the invention should be thin, such as 60 g/m² or below, such as 50 g/m² or below, preferably 45 g/m² or below and more preferably 40 g/m² or below. On the other hand, cellulose-based substrates thinner or with a lower grammage than 30 g/m² may be mechanically too weak and/or less dimensionally stable, when they are coated with wet dispersions and subsequently dried, thus exhibiting shrinkage or curling problems. It is thus preferred to use papers having a grammage of from 30 to 50 g/m², such as from 35 to 45 g/m². Preferably, for the purpose of dispersion coating of good barrier coatings, a substrate paper should have a smooth and closed surface and not absorb too much water from an aqueous coating composition. For some embodiments, a paper substrate may have a higher density, such as above 800 kg/m³, preferably above 900 kg/m³, more preferably above 1000 kg/m³. Such high densities may be obtained by compressing the paper web in a calendering operation, preferably a supercalendering process. In a further embodiment, it may be calendered or super-calendered after base-coating or impregnating the paper substrate at its top surface with an aqueous polymer binder composition, to lock it in its compressed, high-density state. Also lower-density paper substrate may work well for the purpose of carrying gas barrier coatings, however, and may be improved depending on its surface properties and how it is first treated, e.g. by being base-coated, to obtain a smooth and compact, closed surface structure.

### Base Coating, Pre-Coating and Top Coating Layers

A base coating may be particularly important for paper barrier substrates as it closes pores of the paper. The base coating layer may be a clay coating layer, i.e. a coating layer comprising an emulsion binder and high concentration of pigments or inorganic particles, such as i.a. kaolin or CaCOs. Such claycoat layer may also be referred to as a printable pigment coating. For use in the present invention its role is to provide a smooth and dense surface, even if the purpose is not to be used as a print surface. A claycoat base coating may be used with or without an additional pre-coating layer as discussed below; the vapour-deposited metal layer is preferably not applied directly to a claycoat base coating, but the optionally reduced graphene oxide can be. Alternatively, a base coating may be based on starch, starch derivatives or modified starch, or comprise a cellulose-ether, such as carboxy methyl cellulose, CMC, or hydroxyethyl cellulose, HEC. The base coating layer material needs to be relatively thermostable and resistant to melting or deterioration under influence of heating, during heat sealing.

A pre-coating layer may be formed on the barrier substrate (with optional base coating as discussed above). This pre-coating layer ensures that the surface to be further coated is smooth, and may also contribute to oxygen barrier properties (as well as optionally providing a reducing function as discussed below). A pre-coating layer material should be selected which is thermostable and resistant to melting or deterioration under influence of heat sealing; suitably therefore it has a higher melting point than the innermost heat seal layer.

For either paper or polymer barrier substrate layers, the pre-coating layer is suitably provided by aqueous dispersion coating.

Suitable polymers and application methods for the pre-coating layer are as for the reducing layer discussed below. PVOH, starch, starch derivatives and modified starch are preferred alternatives. The thickness of the pre-coating layer may be from 0.5 to 1.5 µm for polymer film barrier substrates, such as about 1 µm, or from 0.5 to 3 µm for paper barrier substrate layers, such as about 1.5 µm.

Additionally, a top coating layer for the barrier material, such as for the vapour-deposited metal layer is possible. Again, suitable polymers and applications are as for the reducing layer, with aqueous dispersion or solution of PVOH especially preferred.

### Vapour-Deposited Metal Layer

The vapour-deposited metal layer is applied by means of physical vapour deposition (PVD) or less preferably by atomic layer deposition (ALD), which is a slower coating method. The thin metal vapour deposition coatings according to the invention are nanometer-thick, i.e. have a thickness that is most suitably counted in nanometers, for example of from 5 to 500 nm (50 to 5000 Å), preferably from 5 to 200 nm, more preferably from 5 to 100 nm and most preferably from 5 to 50 nm.

Generally, below 5 nm the induction heat sealing durable properties may be too low to be useful and above 200 nm, the coating may be less flexible and, thus, more prone to cracking when applied onto a flexible substrate.

The most preferred metal according to the present invention is aluminium. However, any other metal capable of being vapour deposited into a homogeneous coating may be used. Thus, less preferred and less common metals such as Au, Ag, Cr, Zn, Ti or Cu are conceivable also.

Normally, an aluminium metallised layer inherently has a thin surface portion consisting of an aluminium oxide due to the nature of the metallisation coating process used.

Suitably, the vapour-deposited metal layer has an optical density (OD) of from 1 to 5, preferably of from 1.5 to 3.5, more preferably from 2 to 3. At an optical density lower than 1.8, the barrier properties of the vapour-deposited metal layer may be too low and at an OD lower than 2.0, the sheet resistance may be too high. At an OD above 4, the vapour-deposited metal layer may become more sensitive to mechanical stress and less flexible.

Suitably, the vapour-deposited metal layer has a sheet resistance between 0.1 and 1.5 Ω/□, preferably between 0.25 and 1.2 Ω/□, more preferably between 0.4 and 0.8 Ω/□ e.g. 0.5 Ω/□. For the purpose of induction heat sealing, the sheet resistance of the vapour-deposited metal layer should be as low as possible, but there is a practical lower limit to what is possible.

The vapour-deposited metal layer preferably has a thickness of from 5 to 100 nm, more preferably from 5 to 50 nm, which corresponds to less than 1 % of the aluminium metal material present in an aluminium foil of conventional thickness, i.e. 6.3 µm.

In order to improve the adhesion of the vapour-deposited metal layer, a step of surface treatment may be carried out before vapour deposition coating.

The vapour-deposited metal layer may in some embodiments be deposited as two consecutive deposition coatings, for increased quality and flexibility.

In addition to allowing induction sealing, the vapour-deposited metal layer provides light and humidity barrier properties.

### Optionally Reduced Graphene Oxide Layer

Graphene oxide is suitably applied as an aqueous composition.

The graphene oxide may be used without reduction.

Alternatively, the graphene oxide may be reduced to graphene oxide, in which case preferably the layer of reduced graphene oxide is provided in the form of a layer of graphene oxide and an immediately adjacent reducing layer comprising reducing agent, or the layer of reduced graphene oxide is provided in the form of a layer comprising graphene oxide and reducing agent, suitably by including a reducing agent in the graphene oxide composition. The graphene oxide may, depending on the recipe of the graphene oxide composition, be partly or fully reduced also before application onto the substrate surface. The use of a separate reducing layer is discussed below.

In an embodiment, the concentration of the graphene oxide in the aqueous composition is from 0.1 to 15 wt%, such as from 0.5 to 15 wt%, such as from 0.5 to 10 wt%, such as from 0.5 to 6 wt%, such as from 0.5 to 3 wt%, such as from 1 to 2 wt% e.g. 1 wt% or 2 wt%.

The aqueous composition of graphene oxide, where it does not include a reducing agent, preferably comprises essentially only the graphene oxide and water and preferably consists of only these two materials. There are substantially no further polymers in the composition, i.e. no binders or similar components. Preferably, the composition comprises only up to 5 wt%, such as up to 3 wt% of additives, such as dispersing agents, antifoaming agents or the like. The presence of polymer intercalated between (reduced) graphene oxide flakes may be disadvantageous, for example in induction sealing.

Where the aqueous composition of graphene oxide includes a reducing agent, the reducing agent and a nanocellulose compound may further be present in the composition. The reduction reaction may be carried out directly in the aqueous dispersion without agglomeration by addition of a nanocellulose compound, e.g. from 0.1 to 5 wt% microfibrillar cellulose, as described in WO2022/136450. The concentration of the reducing agent e.g. ascorbic acid (vitamin C), may be from 0.5 - 15 wt%. Suitable reducing agents are as discussed for the reducing layer below.

The aqueous composition of graphene oxide may be applied in the form of a dispersion coating or liquid film coating. Roll coating methods are preferred. Coating speeds of 200 to 1000 mm/min are suitable, depending on viscosity of the composition (which depends on graphene oxide concentration).

Suitably, the aqueous composition of graphene oxide is coated at a wet thickness from 10 to 500 µm, preferably 10 to 400 µm e.g. 150 to 300 µm. 200 µm is a preferred wet thickness.

The dry material thickness of the graphene oxide layer may be from 0.1 to 3 µm, such as from 0.5 to 3 µm, such as from 0.5 to 2 µm, such as from 0.5 to 1 µm.

The dry material thickness of the reduced graphene oxide layer may be from 50 to 1000 nm, such as from 100 to 800 nm, such as from 200 to 700 nm, such as from 200 to 600 nm, such as from 400 to 600 nm such as from 450 to 550 nm.

As an example, a total thickness of about 2 µm of dry applied graphene oxide will after reduction to reduced graphene oxide have a total thickness of about 500 nm, as determined by atomic force microscopy (AFM).

Consecutively applied and dried coatings of (reduced) graphene oxide may cover up for a possible defect in each coating, since it is in most cases overlapping with a non-defective part of another coating. In this way, the total applied layer may be virtually defect-free.

### Reducing Layer

A reducing layer may be used to reduce graphene oxide to reduced graphene oxide, as discussed in WO2022/136450. This layer must be adjacent to the graphene oxide layer, but can be applied before or after the graphene oxide layer.

Suitably, the reducing layer comprises a reducing agent and a water-dispersible polymer (this may be a water-soluble polymer) and is applied as an aqueous composition. Alternatively, the reducing agent may be used without a water-dispersible polymer.

The reducing agent may be selected from hydrogen iodide (HI), sodium citrate, ascorbic acid (vitamin C), lemon juice, vinegar and green tea. Ascorbic acid (vitamin C) is preferred.

Preferably, the concentration of the reducing agent in the aqueous composition is from 1 to 10 wt% or 2 to 10 wt%, such as from 2 to 8 wt%, such as from 2 to 6 wt%, such as from 2 to 5 wt%. 3 wt% and 4 wt% are preferred amounts.

Preferably, the concentration of the water-dispersible polymer is 1 to 20 wt%, for example 1 to 20 wt%, such as from 5 to 15 wt%, such as from 7 to 13 wt%, most preferably from 9 to 13 wt%, for example 10 wt%.

The water-dispersible polymer is preferably selected from the group consisting of polyvinylalcohol (PVOH, PVAL), polyethylenevinylalcohol (EVOH, EVAL), water dispersible "polyolefin", such as a copolymer of ethylene with monomers with carboxylic functionality, such as ethylene acrylic acid copolymer (EAA), starch, modified starch, methyl cellulose, ethyl cellulose, carboxymethyl cellulose (CMC), hydroxy ethyl cellulose (HEC), hydroxy propyl cellulose (HPC), hydroxypropylmethyl cellulose (HPMC), sodium carboxymethyl cellulose (NaCMC), nano-/microfibrillar cellulose (NFC/MFC/CNF) and nanocrystalline cellulose (NCC/ CNC). The polymer should have induction heat sealing resistance i.e. have a higher melting point than the innermost layer of heat sealable material.

PVOH is preferred because, in addition to good induction heat sealing resistance, it has good film formation properties, gas barrier properties, cost efficiency, food compatibility and odour barrier properties. The PVOH preferably has a saponification degree of at least 98 %. Suitable grades include Poval 6-98 and 15-99 from Kuraray.

An alternative suitable grade is Exceval, from Kuraray, which is a water dispersible EVOH with low ethylene co-monomer content.

Preferably, the applied, dried, thickness of the reducing layer is 0.5 to 3 µm, more preferably 2 µm.

### Preferred Layer Arrangements of Barrier Material

Preferred layer arrangements of the barrier material include:
- Polymer film substrate / skin layer or pre-coating / metallisation / (reduced) graphene oxide
- Polymer film substrate / metallisation / (reduced) graphene oxide
- Paper substrate / (reduced) graphene oxide / metallisation
- Paper substrate / pre-coating / (reduced) graphene oxide / metallisation

Where reduced graphene oxide is prepared using an adjacent reducing layer, preferred layer structures include:
- Polymer film substrate / metallisation / graphene oxide / reducing layer
- Polymer film substrate / reducing layer / graphene oxide / metallisation
- Paper substrate / reducing layer / graphene oxide / metallisation
- Polymer film substrate / skin layer or pre-coating / metallisation / graphene oxide / reducing layer
- Paper substrate / pre-coating / metallisation / graphene oxide / reducing layer

Where the barrier substrate is of polymer film, it is preferred to apply the vapour-deposited metal layer before (reduced) graphene oxide. This is because application of aqueous compositions of (reduced) graphene oxide onto polymer film may cause difficulties with thermomechanical stability during drying. However, if the metallised film is laminated to the bulk layer, then the combined laminate is thermomechanically stable enough to be coated and dried with dispersion coating. It is not possible to laminate the film and then metallise it.

By contrast, paper substrates have good thermomechanical stability during drying, and it is preferred to apply (reduced) graphene oxide before the vapour-deposited metal layer. Metallisation on papers is not moisture-resistant and may deteriorate if coated with aqueous compositions of (reduced) graphene oxide. Deterioration of metallisation caused by moisture may be a particular problem where there is a pre-coating layer of a moisture-sensitive polymer such as PVOH and/or at low coating speeds.

### Other Layers of Laminated Packaging Material

As explained above, as well as the barrier material and heat seal layer, the laminated packaging material typically further includes a bulk layer and an outermost layer.

A suitable paper or paperboard bulk layer usually has a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper for such pouch-packages usually has a surface weight of from about 50 to about 140 g/m², preferably from about 60 to about 120 g/m², more preferably from about 70 to about 110 g/m². If the barrier material in itself contributes with some stability to the laminated material, the paper layer corresponding to a "bulk" layer may be even thinner, and interact with the barrier in a sandwich structure to still produce a laminated packaging material having the desired mechanical properties altogether.

Optionally, the bulk layer may be provided with an additional barrier coating (e.g. PVOH) which is separate from the barrier material.

It is preferred for the barrier material to be arranged in the laminated packaging material with the barrier substrate directed towards the bulk layer, and the vapour-deposited metal and (reduced) graphene oxide layers directed away from the bulk layer, towards the innermost heat seal layer. This is referred to as "CFI" (coating facing inside). However, the alternative arrangement, "CFL" (coating facing laminate), is also possible.

The barrier material may be bonded to the bulk layer by an intermediate adhesive or thermoplastic polymer bonding layer. According to an embodiment the bonding layer is a polyolefin layer, such as in particular a layer of a polyethylene-based polyolefin copolymer or blend, including in the majority ethylene monomer units. The intermediate bonding layer may bind the bulk layer to the barrier material by melt extrusion laminating the bonding polymer layer between a web of the bulk layer and a web of the barrier material, and simultaneously pressing the three layers together while being forwarded through a lamination roller nip, thus providing a laminated structure by extrusion lamination.

The same thermoplastic polyolefin-based materials as listed below regarding the outermost and innermost layers and tie layers, and in particular polyethylenes, are also suitable for the intermediate bonding layer. In an embodiment, the thermoplastic bonding layer may be a polyethylene layer, such as a low density polyethylene (LDPE) layer. It may typically be applied at an amount from 12 to 25 µm, such as from 12 to 20 µm, such as from 12 to 15 µm, or 11 to 23 g/m², such as 11 to 18 g/m² or 11 to 16 g/m².

In another embodiment, the barrier material may be bonded to the bulk layer by wet application of an aqueous dispersion of an adhesive composition comprising an adhesive polymer binder onto one of the web surfaces to be laminated, and pressing the two webs together while they are forwarded through a lamination roller nip, thus providing a laminated structure by wet lamination. The moisture of the aqueous adhesive composition is absorbed into the fibrous cellulose network of the bulk paperboard, and partly evaporates with time, during the subsequent lamination processes. There is thus no need for a forced drying step. The dry amount applied of the intermediate bonding layer is typically from 1 to 10, preferably 1 to 6, such as from 3 to 4 g/m² only.

The adhesive polymer binder is suitably selected from the group consisting of acrylic polymers and copolymers, starch, cellulose and polysaccharide derivatives, polymers and copolymers of vinyl acetate and vinyl alcohol, e.g. polyvinyl acetate. For best possible environmental and sustainability profile, adhesive binders originating from plants or non-fossil sources are preferred.

Suitable thermoplastics for the outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE i.e. LLDPE produced by polymerising an ethylene monomer with a C₄-C₈, more preferably a C₆-C₈, alphaolefin alkylene monomer in the presence of a metallocene catalyst) and blends or copolymers thereof. According to an embodiment, the outermost heat sealable and liquid-tight layer is an LDPE, while the innermost heat sealable, liquid-tight layer is a blend composition of m-LLDPE and LDPE for optimal lamination and heat sealing properties. In a preferred embodiment, the innermost layer comprises 50 to 90 wt% mLLDPE and 10 to 50 wt% LDPE, for example 70 wt% mLLDPE and 30 wt% LDPE. However, lower proportions of mLLDPE such as 10 to 50 wt% e.g. 30 wt% in such blends are also envisaged.

The outermost layer is typically applied at a thickness of from 5 to 20 µm, such as from 10 to 15 µm, or 5 to 15 g/m², such as from 8 to 15 g/m². The innermost layer may be applied at thicknesses ranging from 10 to 50 µm, such as from 15 to 40 µm, such as from 20 to 40 µm, or 10 to 50 g/m², such as 15 to 45 g/m², such as 20 to 45 g/m², or 20 to 40 g/m².

The outermost and/or innermost layers are preferably applied by extrusion coating.

In a further embodiment, the innermost liquid tight, heat sealable polyolefin layer is a pre-manufactured film comprising the same or similar polyolefins, as described above (e.g. LLDPE), for improved robustness of the mechanical properties of the packaging material. Due to the manufacturing process in film blowing and film casting operations, and optional subsequent film orientation operation steps, the polymers of such films acquire different properties from what is possible from (co-)extrusion coated polyolefin layers. Such a pre-manufactured polymer film thus contributes to the mechanical robustness of a laminated packaging material and to mechanical strength and package integrity of formed and filled packaging containers from the laminate packaging material.

According to an alternative embodiment, suitable bonding or tie layers in the interior of the laminated material, such as for example between the bulk or core layer and the barrier material, or between the outer heat sealable layer and the barrier material, are also so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

### Method of Forming Laminated Packaging Material

The method of making the laminated packaging material comprises lamination of the barrier material, and the heat seal layer, together with a bulk layer, an outermost layer and and an innermost layer. The outermost and innermost layers may comprise heat sealable polymers. The outermost and/or innermost layers may make up the heat seal layer, especially the innermost layer. The method of making the laminated packaging material comprises lamination of the bulk layer, barrier material, outermost layer and innermost (heat seal) layers, and may also comprising formation of the barrier material before or between the lamination steps. The layers of the laminated packaging material may be joined in any order.

In a preferred embodiment, the bulk layer and barrier material are laminated, followed by application of the innermost layer and then the outermost layer (or less preferably followed by application of the outermost layer and then the innermost layer). This order is referred to as "LID" wherein L= lamination of paperboard to barrier layer by intermediate bonding layer; I = application of innermost layer to barrier layer; D (décor) = application of outermost layer onto paperboard. The less preferred alternative is referred to as "LDI". Alternatively, the bulk layer may be initially joined to the outermost layer. This order is referred to as "DLI".

The barrier substrate may optionally be laminated to the bulk layer before application of one or more layers of the barrier material. For example, a polymer film substrate bearing a vapour-deposited metal layer may be laminated to the bulk layer before (reduced) graphene oxide is applied.

The method of making the laminated packaging material may further comprise formation of the barrier material. Formation of the barrier material suitably comprises providing the barrier substrate layer with one or more of the pre-coating layer, the vapour-deposited metal layer, the optionally reduced graphene oxide layer and the reducing layer.

### Packaging Container and Method of Forming Packaging Container

The method of forming a packaging container comprises heat sealing (e.g. induction heat sealing) of a laminated packaging material as described above to form at least one heat seal.

According to one embodiment, the packaging container is manufactured at least partly from the laminated packaging material of the invention, and according to a further embodiment it is in its entirety made of the laminated packaging material. The packaging container comprises at least one heat seal.

Types of packaging container are discussed in more detail below with reference to the figures.

The induction heat sealing may be longitudinal sealing and/or transverse sealing.

The packaging container formed from the laminated packaging material may be partly sealed, filled with liquid or semi-liquid food and subsequently sealed, by sealing of the packaging material to itself, optionally in combination with a plastic opening or top part of the package.

The laminated packaging material may be provided in the form of a web or blanks.

In one preferred embodiment, the method comprises the steps of:
- providing the laminated packaged material in the form of a continuous web,
- forming the web-formed packaging laminate into a continuous tubular shape and applying a longitudinal seal (optionally by induction heat sealing) in the longitudinal direction,
- filling the packaging laminate tube with a liquid foodstuff,
- forming heat-sealing zones by means of induction heating, at predetermined intervals in the traversing direction of the filled tube, and cutting through the center of each traversing sealing zone, thereby forming individual containers.

In another embodiment, the method comprises:
- providing the laminated packaging material in the form of pre-cut blanks with prepared, creased folding lines, each blank corresponding to one packaging container to be formed, having side walls, bottom and top panels, divided by the folding lines,
- folding to bring the longitudinal incision edges of the packaging container blank to overlap with each other,
- applying heat to seal the overlapping edges to each other to form a flat-folded, tubular blank having a longitudinal sealing joint (optionally by induction heat sealing).

These flat-folded, tubular blanks are delivered to a filling machine, which in a continued process, intermittently picks up one blank after another, erecting it to a tubular blank (capsule/ container precursor), followed by:
- fold-forming one of its top or bottom panels and heat sealing the folded panels to each other,
- filling the tubular, end-sealed blank with a liquid foodstuff,
- fold-forming the other of top or bottom panels and heat sealing (optionally by induction heat sealing) the folded panels to obtain a filled and sealed, cuboid packaging container.

Induction heat sealing is suitably carried out using an inductor (e.g. an inductor coil or other electromagnetic device) which is an AC power source. In an embodiment, the AC power source is configured to generate a variable-voltage signal of a frequency in the range of 1 MHz to 30 MHz. Preferably the frequency is 6.78 MHz or 13.56 MHz, available for industrial purposes. Also, a frequency of 27.12 MHz could be considered. At the other end of the interval, a frequency around 2 MHz could be used, thereby allowing standard AC power sources to provide the required magnetic field. All of these frequencies have proven to provide the high efficiency needed to keep the induced power constant in the packaging material, without increasing the inductor current to a level which could hamper overall induction heating system reliability.

Power endurance of 200 ms at 1000 W is a good performance.

### Examples and description of preferred embodiments

In the following, preferred embodiments of the invention will be described with reference to the drawings, of which:
Fig. 1 schematically shows in cross-section a barrier material suitable for use in embodiments of the invention.
Figs. 2a-c schematically show in cross-section embodiments of the laminated packaging material according to the invention.
Fig. 3a shows schematically a method for dispersion coating of an aqueous composition of graphene oxide onto a substrate in forming the barrier material of Fig. 1.
Fig. 3b is a diagrammatic view of an example of a plant for physical vapour deposition to form the vapour-deposited metal layer of the barrier material of Fig. 1.
Fig. 4a shows schematically a method for melt extrusion laminating together two material webs by means of an intermediate thermoplastic polymer in forming the laminated packaging material of Fig. 2c.
Fig. 4b shows schematically a method, for melt (co-) extrusion coating layer(s) of a thermoplastic polymer onto a web substrate, e.g. to form innermost and outermost layers of the laminated packaging material of Fig. 2c.
Fig. 5a, 5b, 5c and 5d show typical examples of liquid carton packaging containers produced from the laminated packaging materials of Fig. 2a-c.
Fig. 6 shows the principle of how such liquid carton packaging containers are manufactured from the packaging laminate in a continuous, roll-fed, form, fill and seal process.
Fig. 7 is a cross-sectional view of a sealing system for use with a packaging machine to form packaging containers of Fig. 5a.

### Examples

### Application of GO/rGO on substrate

The substrate in question can be a metallized layer on polymer or paper, in which the polymer or paper is the barrier substrate.

### 1. GO dispersion

A dispersion of GO with a solid content of 1 or 2 % in water was dispersed on the substrate. The thickness of the dispersion was between 150 and 300 µm wet. The resulting dry thickness for a wet dispersion of 200 µm with 2 % GO is calculated to be about 2 µm. The coating was done with a lab blade coater (MSK-AFA-III-HB-220) with a die gap of 200 µm and a coating speed of 300 mm/min. The surface of the blade coater was set to 60°C and drying time was thereby 2 minutes.

### 2. GO dispersion followed by reduction

GO was applied as above and then dried. In a following step a reduction agent of ascorbic acid (vitamin C) in aqueous solution was applied at a wet thickness of approximately 200 µm / 200gsm on top of the GO resulting in reduced graphene oxide (rGO). The concentration of the vitamin C was 3 wt%. The final dry thickness for rGO (based again on a wet dispersion of 200 µm with 2 % GO) was measured by AFM to be about 500 nm. XRD was used to follow the reduction over time.

### Sealing Test Set-up - Packaging Material

The purpose of the test sample is to simulate two layers of normal packaging material. The test samples are respectively composed of a layer of paper board,the barrier layer according to a sample described below (i.e. metallised polymer film with/without graphene oxide) and a polymer film (LDPE). In the test, two set of test samples are put together mirrored with the two layers of LDPE facing each other. The purpose of the test set-up is to simulate a transversal seal of two layers of packaging material in a filling machine where the two inside LDPE layers are melted together.

### Sealing Test Set-up - Sealing Equipment

The test sample set-up is placed under pressure (applied force 400 N) between an inductor and an anvil similar to a Transversal Sealing process in a filling machine. The inductor is a typical transversal sealing inductor used for induction heating (IH) sealing of packaging material that normally contains aluminium foil. The anvil consists of an electrically non-conductive material in order not to interfere with the inductive heating of the sample.

Electrical power is applied to the inductor during a short sealing pulse and the alternating current (AC) in the MHz range in the inductor induces a current in the vapour-deposited metal layer of the sample. Due to resistive losses in the vapour-deposited metal layer, heat is dissipated in the vapour-deposited metal layer, and this heats in its turn the surrounding layers and especially the LDPE layers between the two vapour-deposited metal layers. These two LDPE layers are heated and sealed to each other after a short cooling period. In packaging material, these LDPE layers are the inside layers of the packaging material and the heating results in a seal between the two packaging material layers typically creating a transversal seal.

A sealing pulse t=200 ms was set and power was increased in steps. Time until conductivity was lost was measured.

Sheet resistance (Rs) of a vapour-deposited metal layer may be measured by a contactless method on a laminated material, by means of NAGY type SRM-12 instrument, from Nagy Instruments, Germany. Measurements were performed on samples of a size of 0.05 x 0.05 meters (5 by 5 cm). Nine measure points were taken from a 1 meter long portion of a web of 0.17 m width, i.e. three measure points from the middle of the web and three measure points closer to each of the respective ends of the web portion. On a sample of homogenous density, the sheet resistance is the value R given by the principal formula R= density * L/W*t , wherein L and W are the sides of a square sheet area, which are of the same lengths, and t is the thickness of the sheet. The unit is ohms / square (Ω/□).

Atomic force microscopy (AFM) or scanning force microscopy (SFM) is a very-high-resolution type of scanning probe microscopy (SPM), with demonstrated resolution on the order of fractions of a nanometer, more than 1000 times better than the optical diffraction limitThe information is gathered by "feeling" or "touching" the surface with a mechanical probe. Piezoelectric elements that facilitate tiny but accurate and precise movements on (electronic) command enable precise scanning.

### Experiment 1 - Met-Bo-LLDPE

### Sample Preparation

A commercial, metallised BO-LLDPE-film (23 µm, OD 2.3, Sample 1-1) from Jindal was used (SealTOUGH^{™} 23XM344). The film was cut into A4-sheets and coated on the metallised side with GO dispersion followed by reduction as described above to form Sample 1-2.

### Results

Sample 1-1: Metallised BO-LLDPE (23 µm) (reference)
   1-1a) t: 200 ms, P:1500 W; - conductivity was lost due to cracking after ~100 ms
   1-1b) t: 200 ms, P: 2000 W; - conductivity was lost due to cracking after-75 ms
Sample 1-2: Metallised BO-LLDPE (23 µm) with rGO-coating
   1-2a) t: 200 ms, P:1500 W; - conductivity was maintained for 200 ms
   1-2b) t: 200 ms, P: 2000 W; - conductivity was maintained for 200 ms

### Conclusion

rGO-coating on Met BO-LLDPE significantly increased the power endurance (prevented cracking).

### Experiment 2 - Met-BoPP

### Sample Preparation

A commercial, metallised BoPP-film (16 µm, OD: 2.8, BoPP/ skin layer of EVOH / metallisation, Sample 2-1) from Jindal (Metallyte^{™} 16MM883) was cut into A4-sheets and coated on the metallised side with GO dispersion (without reduction) as described above to form Sample 2-2. To form Sample 2-3, a similar GO dispersion was applied to the non-metallised side of the film.

### Results

For all samples, sheet resistance was 1-1.2 Ω/□. Many defects in films e.g. scratches and defects within coated area.
Sample 2-1: Metallised BOPP (16 µm) (Reference)
   2-1a) t: 200 ms, P: 800 W; - conductivity was maintained for 200 ms
   2-1b) t: 200 ms, P: 1000 W; - conductivity was lost due to cracking after~125 ms
Sample 2-2: Metallised BOPP (16 µm) with GO-coating on the metallised side
   2-2a) t: 200 ms, P:800 W; - conductivity was maintained for 200 ms
   2-2b) t: 200 ms, P: 1000 W; - conductivity was maintained for 200 ms
   2-2c) t: 200 ms, P: 1500 W; - conductivity was lost after -125 ms
Sample 2-3: Metallised BOPP (16 µm) with GO-coating on the non-metallised side (comparative)
   2-3a) t: 200 ms, P:800 W; - conductivity was maintained for 200 ms
   2-3b) t: 200 ms, P: 1000 W; - conductivity was maintained for 200 ms
   2-3c) t: 200 ms, P: 1500 W; - conductivity was lost after ~50 ms

### Conclusion

Graphene oxide layer immediately adjacent to vapour-deposited metal layer clearly increases power endurance (prevented cracking).
GO is simpler to use than rGO.
GO on opposite side of film: unclear effect, crack formation also within GO-area.

### Experiment 3 - Board/ LDPE/ met-BoPP

### Sample Preparation

A 16 µm metallised BoPP-film (16 µm, OD: 2.8, BoPP/ pre-coating / metallisation, Sample 3-1) from Jindal (Metallyte^{™} 16MM883, as used in Experiment 2) was laminated with 20 gsm LDPE Ineos 19N730 to a 80 mN Board (BK-G Duplex CLC/C). (Line speed 100 m/ min, LDPE melt temp 310°C, corona treatment on board and film). The laminate was cut into A4-sheets and coated as follows:
- Sample 3-2, GO dispersion only (no reduction)
- Sample 3-3, GO dispersion followed by reduction.

### Results

For all samples, sheet resistance was 1-1.2 Ω/□. Many defects in films e.g. scratches and defects within coated area.
Sample 3-1: Board (80 mN)/ LDPE (20)/ BOPP-metallised (16 µm) (Reference)
   3-1a) t: 200 ms, P: 1000 W; - conductivity was maintained for 200 ms
   3-1b) t: 200 ms, P: 1500 W; - conductivity was lost due to cracking after-75 ms
Sample 3-2: Board (80 mN)/ LDPE (20)/ BOPP-metallised (16 µm) with GO-coating on the metallised side
   3-2a) t: 200 ms, P: 1000 W; - conductivity was maintained for 200 ms
   3-2b) t: 200 ms, P: 1500 W; - conductivity was maintained for 200 ms
   3-2c) t: 200 ms, P: 2000 W; - conductivity was lost after ~100 ms
Sample 3-3: Board (80 mN)/ LDPE (20)/ BOPP-metallised (16 µm) with rGO-coating on the metallised side
   3-3a) t: 200 ms, P:1000 W; - conductivity was maintained for 200 ms
   3-3b) t: 200 ms, P:1500 W; - conductivity was lost after ~125 ms

### Conclusion

Graphene oxide layer immediately adjacent to vapour-deposited metal layer clearly increases power endurance. Laminated film is better than free standing film. This can be seen by comparing power endurance time at 1500 W for Samples 2-2c and 3-2b.

Reduced graphene oxide does not increase power endurance as well as graphene oxide, but is better than Reference Sample 3-1 with metallisation only.

### Overall Results of Experiments

The results presented above are summarised in Tables 1 and 2. Table 1 shows shading for samples with adequate power endurance. In Table 2 the power endurances of the different samples were rated according to a scale from 1-3, where "1" means "not acceptable" (power endurance below 100 ms), "2" means "uncertain" (power endurance 100-200 ms) and "3" means "acceptable" (power endurance 200 ms). "(3)" means "not evaluated, but a rating of 3 expected because higher powers gave 3". "-" and "?" mean "not evaluated".

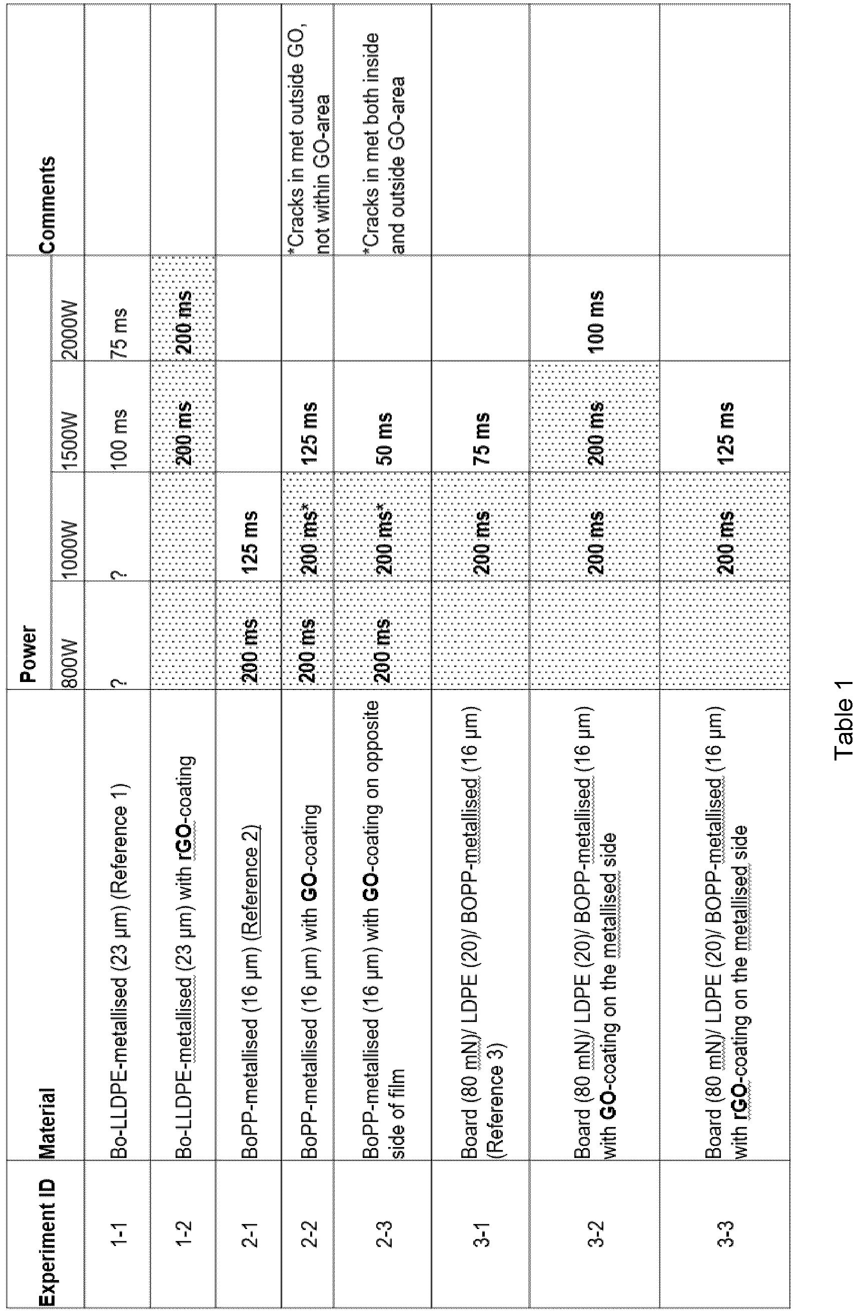

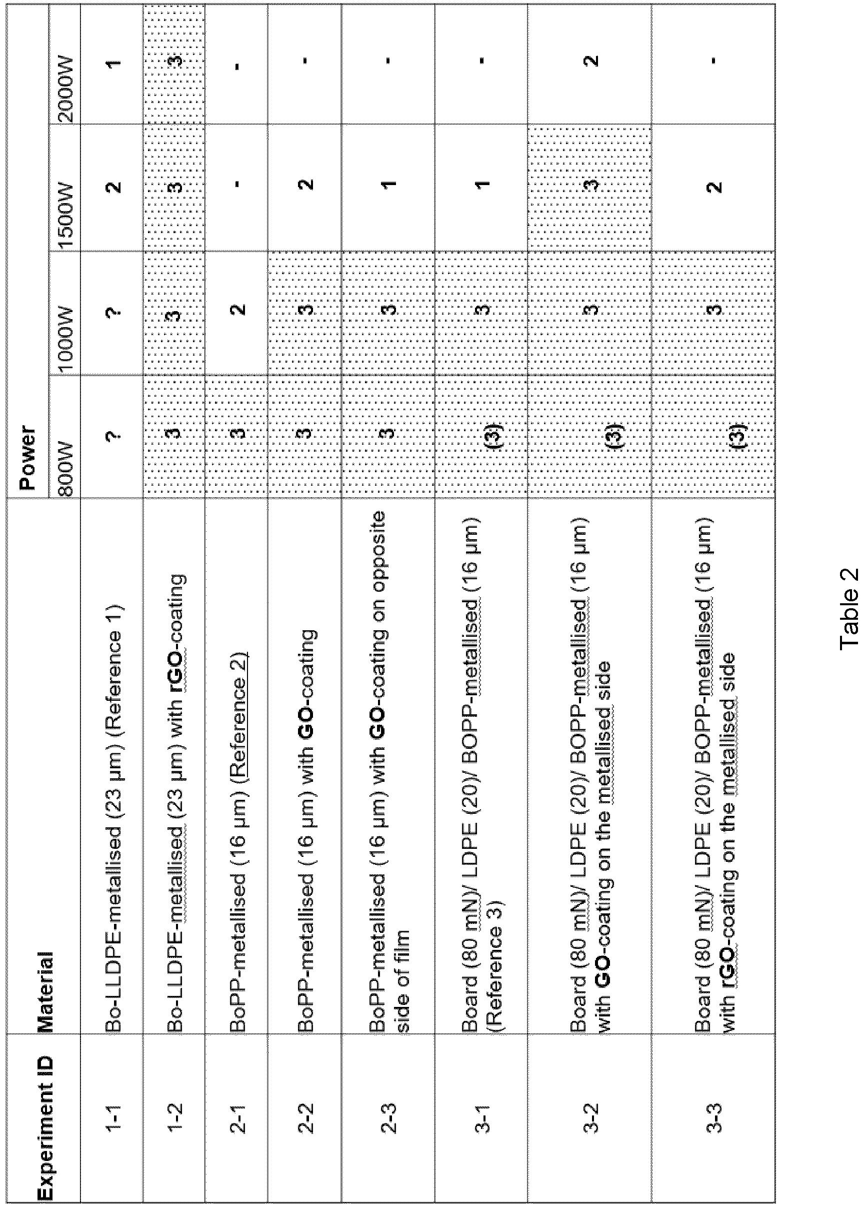

Further, relating to the attached figures:

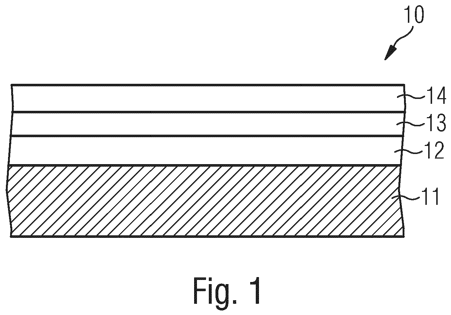

Fig. 1 shows a barrier material 10 suitable for use in preferred embodiments of the invention. The barrier material 10 comprises (in order of adjacent layers) vpaper barrier substrate 11, a reducing layer 12 comprising PVOH and vitamin C, a reduced graphene oxide layer 13 (applied in the form of a graphene oxide layer and reduced by the reducing layer 12), and a vapour-deposited metal layer 14.

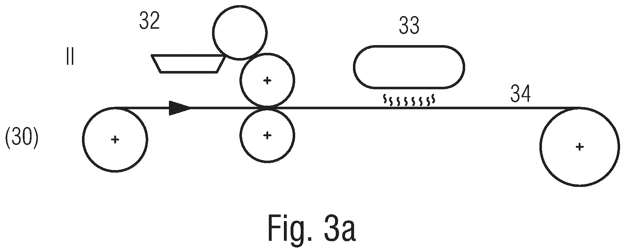

Turning to production of the barrier layer 10, in Fig. 3a, a process of aqueous dispersion coating 30 is shown, which may be used for applying the reducing layer 12 and the graphene oxide layer 13 to the paper barrier substrate 11. The paper barrier substrate web 11 is forwarded to the dispersion coating station 32, where the aqueous dispersion composition for the reducing layer 12 is applied by means of rollers onto the top surface of the substrate surface. Since the dispersion composition has a high aqueous content, there will be a lot of water on the wet coated substrate that needs to be dried by heat, and evaporated off, to form a continuous layer. The drying is carried out by a hot air dryer 33, which allows the moisture to evaporate and be removed from the substrate surface by air convection. The substrate temperature as it travels through the dryer is kept constant at a temperature of from 60 to 80 °C. Alternatively, drying may be partly assisted by irradiation heat from infrared IR-lamps, in combination with hot air convection drying.

The process shown in Fig. 3a is subsequently repeated to form a continuous graphene oxide layer 13, which is homogenous and has an even quality with respect to barrier properties and surface properties, i.e. evenness and wettability. Each of the layers 12 and 13 may be applied in two coating steps, i.e. as two part-layers with an intermediate drying step.

Alternatively, the layers 12 and 13 may be applied in the opposite order, as in Experiments 1 to 3 reported above.

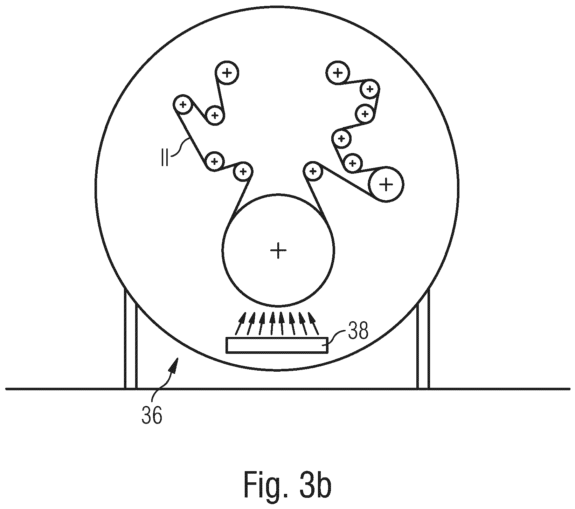

Fig. 3b is a diagrammatic view of an example of a plant 36 for PVD of an aluminium layer, onto a barrier substrate 11. The barrier substrate 11, already bearing the reducing layer 12 and the reduced graphene oxide layer 13, is subjected, on its pre-coated side, to continuous evaporation deposition of vaporised aluminium, to form a vapour-deposited metal layer of aluminium 14 of optical density 3 and coating thickness 20 to 100 nm. The aluminium vapour may be formed from ion bombardment of an evaporation source of a solid piece of aluminium 38. A barrier material 10 is thus formed.

The resulting barrier material web 10 is wound up onto a reel for intermediate storage and later further lamination operations.

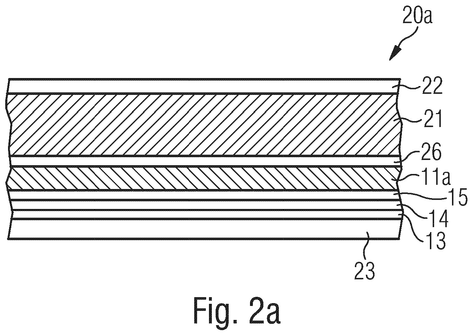

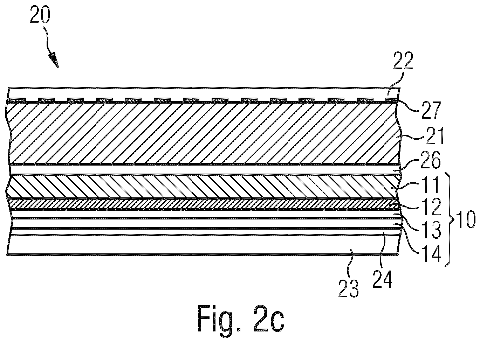

In Fig. 2c, a laminated packaging material 20 for liquid carton packaging including the barrier material 10 of Fig. 1 is shown.

The laminated packaging material 20 comprises a paperboard bulk layer 21 of paperboard, having a bending force of 80 mN and a grammage weight of about 200 g/m², and further comprising an outer liquid tight and heat sealable layer 22 of polyolefin applied on the outside of the bulk layer 21, which side is to be directed towards the outside of a packaging container produced from the laminated packaging material. The layer 22 is transparent to show the printed décor pattern 27, applied onto the bulk layer of paper or paperboard, to the outside, thus informing about the contents of the package, the packaging brand and other information targeting consumers in retail facilities and food shops. The polyolefin of the outer layer 22 is a conventional low density polyethylene (LDPE) of a heat sealable quality. It is applied at an amount of about 12 g/m². An innermost liquid tight and heat sealable layer 23 is arranged on the opposite side of the bulk layer 21, which is to be directed towards the inside of a packaging container produced from the packaging laminate, i.e. the layer 23 will be in direct contact with the packaged product. The thus innermost heat sealable layer 23, which is to form strong transversal heat seals of a liquid packaging container made from the laminated packaging material, comprises a blend of LDPE and mLLDPE. It is applied at an amount of about 22 g/m².

The bulk layer 21 is laminated to the barrier material 10 of Fig. 1 with the vapour-deposited metal layer 14 facing inwards. This is done using an intermediate bonding layer 26 of a low density polyethylene (LDPE). The intermediate bonding layer 26 is formed by means of melt extrusion as explained below. It is applied at an amount of about 20 g/m².

The innermost heat sealable layer 23 is well adhered to the surface of the vapour-deposited metal layer 14 of the barrier material 10 by an intermediate coextruded tie layer 24, e.g. of ethylene acrylic acid copolymer (EAA), applying the layers 23, 24 together in a single melt coextrusion coating step.

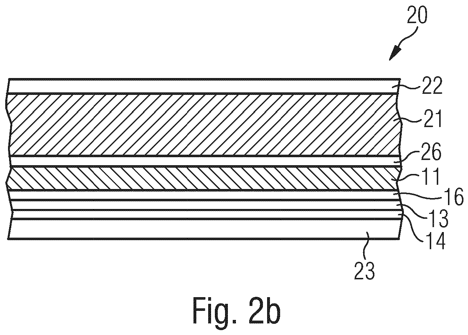

Alternative embodiments of the laminate 20 are shown in Figs. 2a and, 2b include barrier materials 10 as follows (in order from bulk layer to inside):

### Fig. 2a:

Oriented PO film barrier substrate 11a - optional skin layer 15 - vapour-deposited metal layer 14 - (reduced) graphene oxide 13 (optionally with reducing layer 12).

This corresponds to the experiments reported above.

### Fig. 2b:

Paper barrier substrate 11 - optional base coating or PVOH pre-coating layer 16 - (reduced) graphene oxide 13 (optionally with reducing layer 12) - vapour-deposited metal layer 14

Fig. 2c discussed above is very similar to the embodiment of Fig. 2b wherein pre-coating layer 16 may be absent (is optional).

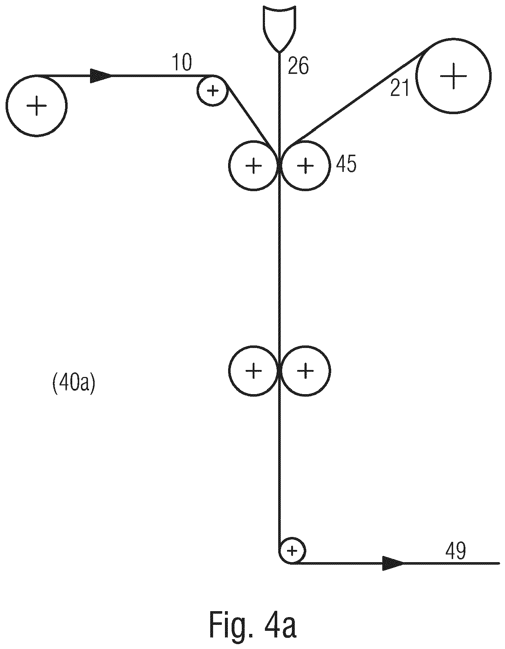

Fig. 4a shows a process for a lamination step 40a in the manufacturing of the packaging laminate 20 of Fig. 2c as the bulk layer 21 is laminated to the barrier material web 10 of Figs. 1 and 2c.

As explained in connection with Fig. 2c, the bulk layer paperboard 21 may be laminated to the barrier material 10 by means of melt extrusion lamination. Thus, a molten polymer curtain 26 of e.g. LDPE is fed into a nip of lamination rollers 45, as the two webs 21 and 10 are also forwarded to the same lamination nip and joined to each other by the extruded intermediate bonding layer 26 of LDPE. The three layers are thus pressed together and joined at the nip 45, which is formed between a press roller and a chill roller, thus cooling the laminated material to properly solidify the intermediate bonding layer 26. The resulting pre-laminate 49 is forwarded to be wound up on a reel for intermediate storage, or directly to subsequent lamination operations.

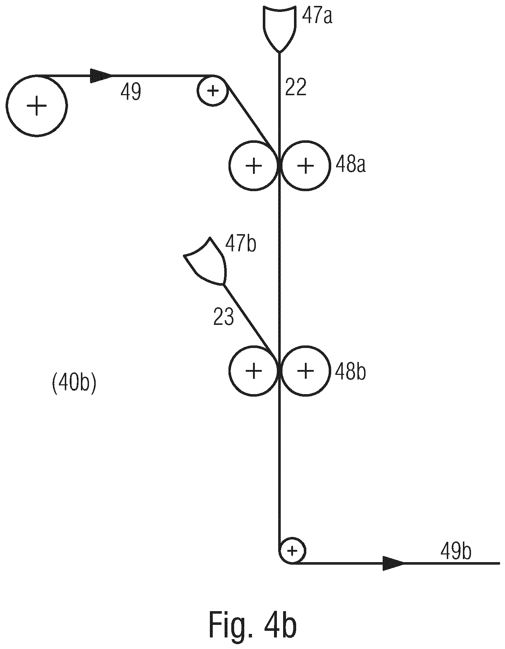

In Figure 4b, the pre-laminate 49, of bulk layer 21 and barrier material 10, is forwarded to further lamination steps 40b, either directly from the lamination operation 40a of Fig. 4a, or from engaging and unwinding from an intermediate storage reel.

The non-laminated side of the bulk layer 21, i.e. its print side, is joined at a cooled roller nip 48a to a molten polymer curtain 22 of the LDPE which is to form the outermost layer 22 of the laminated material, the LDPE being extruded from an extruder feedblock and die 47a. Subsequently, the pre-laminate, now bearing the outermost layer 22, passes a second extruder feedblock and die 47b and a lamination nip 48b, where a molten polymer curtain 46b is joined and coated onto the other side of the pre-laminate, i.e. on the inner side of the barrier material 10. Thus, the innermost heat sealable layer(s) 23 are coextrusion coated onto the inner side of the barrier material web, to form the finished laminated packaging material 20, which is finally wound onto a storage reel, not shown. This is the "LDI" order of steps.

These two coextrusion steps at lamination roller nips 48a and 48b may alternatively be performed as two consecutive steps in the opposite order ("LID" order of steps).

According to another embodiment, one or both of the outermost layers may instead be applied in a pre-lamination station, where the coextrusion coated layer is first applied to the outside of the (printed) bulk paperboard layer ("DLI" order of steps) or onto the inner surface of the barrier material, and thereafter the two pre-laminated paper webs may be joined to each other, as described above in connection with Fig. 4a.

According to a further embodiment, the innermost layers 23 of the heat sealable and liquid-tight thermoplastic layers may be applied in the form of a pre-manufactured film, which is laminated to the barrier-coated substrate material 10. The innermost layer pre-manufactured film 23 may be laminated to the barrier-coated substrate material 10 by means of wet, cold dispersion adhesive lamination, or by means of melt extrusion lamination.

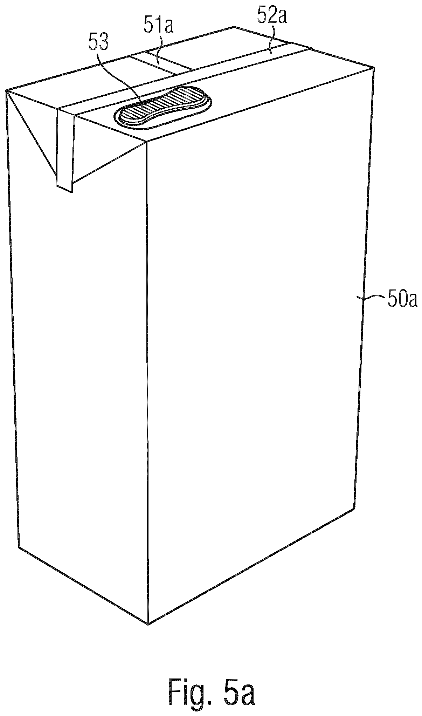

Fig. 5a shows an embodiment of a packaging container 50a produced from the laminated packaging material 20. The packaging container is particularly suitable for beverages, sauces, soups or the like. Typically, such a package has a volume of about 100 to 1000 mL. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

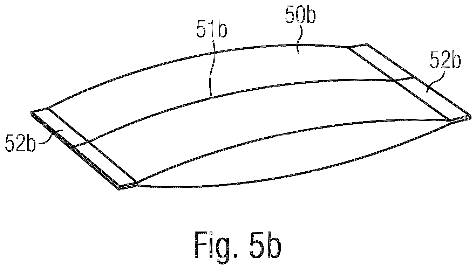

Fig. 5b shows an alternative example of a packaging container 50b produced from an alternative packaging laminate according to the invention. The alternative packaging laminate is thinner by having a thinner paper bulk layer 21, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

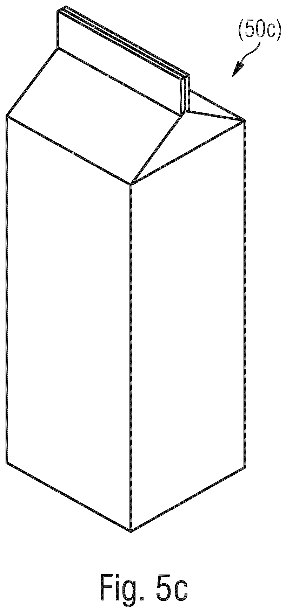

Fig. 5c shows a gable top package 50c, which is fold-formed from a pre-cut sheet or blank, from the laminated packaging material 20. Also flat top packages may be formed from similar blanks of material.

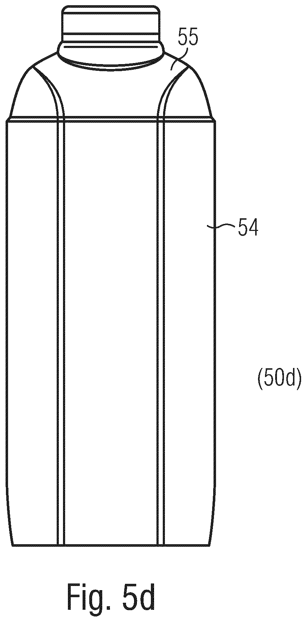

Fig. 5d shows a bottle-like package 50d, which is a combination of a sleeve 54 formed from a pre-cut blank of the laminated packaging material 20, and a top 55, which is formed by injection moulding plastics in combination with an opening device such as a screw cork or the like. This type of package is for example marketed under the trade name of Tetra Top^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

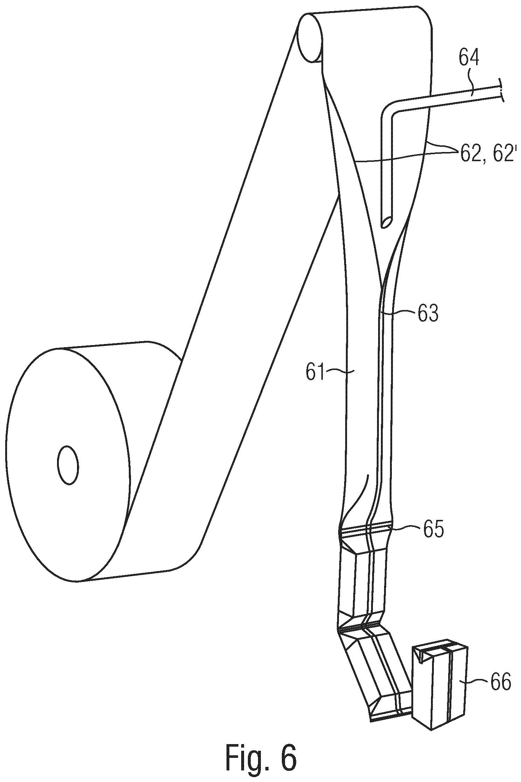

Fig. 6 shows the principle as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material. Final forming of the package container can be configured in many different ways, in order to obtain various package container shapes such as a brick-shape, a hexagonal prism, octagonal prism, tetrahedral shape and the like.

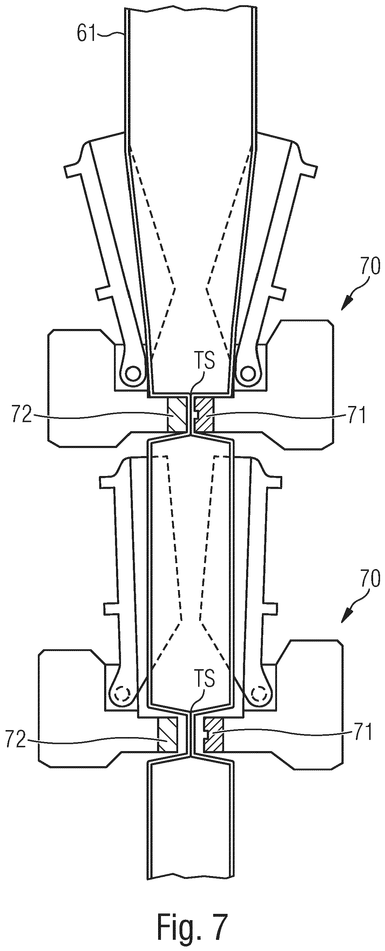

Fig. 7 shows a sealing system for use in forming transverse seals in a longitudinally sealed tube 61 of laminated packaging material of a preferred embodiment of the invention.

The transversal seals (TS) are formed by a sealing system 70. Two sets of transversal sealing systems 70 are provided, arranged in a downstream configuration (one sealing system 70 being arranged downstream another sealing system). By operation of the sealing system, a high-frequency inductor 71 and a counter element 72, positioned on movable sealing jaws, will move and press together the filled packaging material tube 61 in the transversal direction to form TS seal zones. As electromagnetics losses, e.g. eddy currents, are generated in the vapour-deposited metal layer 14 workpiece of the laminated packaging material 20, the inner heat seal layer 23 will be heated to form the transversal TS seal zones at every predetermined interval by high-frequency induction heating.

For creating the eddy currents in the workpiece, the inductor 71 is connected to a high frequency power supply. The inductor 71 may be operated at frequencies from 100 kHz to above 27 MHz, depending on the design of the heat-sealing system.

It should be mentioned that the movement of the sealing jaws will also provide a forward motion of the tube 61 of laminated packaging material, whereby the seals TS will be arranged at predetermined intervals.

Then, each transversal TS seal zone is cut along a centerline by a cutting knife (not shown) and divided to form individual packaging containers 50a.

Advantages of preferred embodiments of the invention include:
- The non-foil laminated packaging material provides better recyclability and a more sustainable environmental profile than foil-containing laminates. The very small amount of aluminium metal can be recycled with the polyethylene component. rGO was found to be washed away in the de-inking process.
- The laminated packaging material is sealable by means of induction heat sealing in existing filling and sealing equipment and provides good sealing properties.
- The laminated packaging material provides good barrier properties not only against gas and water vapour, but also towards light and odour substances.
- The laminated packaging material is suitable for long-term, aseptic packaging, at reasonable cost.

As a final remark, the invention is not limited by the embodiments shown and described above, but may be varied within the scope of the claims.

### List of reference numerals:

10 barrier material
11 paper barrier substrate
11a polymer film barrier substrate
12 reducing layer
13 reduced graphene oxide layer
14 vapour-deposited metal layer
15 skin layer
16 pre-coating layer
20 laminated packaging material
20a alternative laminated packaging material
21 paperboard bulk layer
22 outer heat sealable layer
23 inner heat sealable layer
24 coextruded tie layer
26 intermediate bonding layer
27 printed décor pattern
30 aqueous dispersion coating
31 paper barrier substrate web
32 dispersion coating station
33 hot air dryer
36 PVD plant
38 solid piece of aluminium
45 lamination rollers
47a outer layer die
47b inner layer die
48a outer layer nip
48b inner layer nip
49 pre-laminate
50a packaging container
50b pouch container
50c gable top package
50d bottle like package
51a longitudinal seal
52a transversal seal
52b transversal seal
53 opening device
54 sleeve
55 top
60 tube
52, 52' edges of web
63 overlap joint
64 filling of tube
65 double transversal seal
70 sealing system
71 inductor
72 counter element

## Claims

1. A non-foil laminated packaging material for heat sealing into packages for liquid or semi-liquid food products, the laminated packaging material comprising:
- a barrier material formed of a barrier substrate layer bearing a vapour-deposited metal layer and a layer of optionally reduced graphene oxide immediately adjacent to the vapour-deposited metal layer; and
- a heat seal layer.

2. A laminated packaging material as claimed in Claim 1, wherein the vapour-deposited metal layer is induction heat susceptible, and the laminated packaging material is suitable for induction heat sealing.

3. A laminated packaging material as claimed in Claim 1 or Claim 2, wherein the layers of the barrier material are arranged with either the vapour-deposited metal layer or the layer of optionally reduced graphene oxide towards the barrier substrate layer.

4. A laminated packaging material as claimed in any one of the preceding claims, wherein the layer of reduced graphene oxide is provided in the form of a layer of graphene oxide and an immediately adjacent reducing layer comprising reducing agent, or wherein the layer of reduced graphene oxide is provided in the form of an optionally already at least partially reacted layer comprising graphene oxide and reducing agent.

5. A laminated packaging material as claimed in Claim 4, wherein the reducing agent is selected from ascorbic acid (vitamin C), hydrogen iodide (HI), sodium citrate, lemon juice, vinegar and green tea.

6. A laminated packaging material as claimed in any one of the preceding claims, wherein the barrier substrate layer comprises paper or paperboard or other cellulose-based material, or comprises a polymer film.

7. A laminated packaging material as claimed in Claim 6, wherein the barrier substrate layer is a polymer film comprising mono-oriented (MO), biaxially-oriented (BO) or unoriented polyolefin, and preferably comprising MO polyethylene, BO polypropylene or BO polyethylene.

8. A laminated packaging material as claimed in any one of the preceding claims, wherein the barrier substrate layer is provided with a pre-coating layer.

9. A laminated packaging material as claimed in Claim 4 or Claim 8, wherein the reducing layer and/or the pre-coating layer comprises polyvinyl alcohol.

10. A laminated packaging material as claimed in any one of the preceding claims, wherein the vapour-deposited metal layer comprises aluminium.

11. A laminated packaging material as claimed in any one of the preceding claims, wherein the barrier material comprises the following layers in order:
paper or paperboard - optionally reduced graphene oxide - vapour deposited metal layer; or
polymer film - vapour deposited metal layer - optionally reduced graphene oxide.

12. A laminated packaging material as claimed in any one of the preceding claims, further comprising a bulk layer of paper or paperboard or other cellulose-based material, an outermost protective material layer and the heat seal layer as an innermost liquid tight material layer, with the barrier material arranged between the bulk layer and the innermost layer.

13. A laminated packaging material as claimed in Claim 12, wherein a further barrier coating is provided on the bulk layer.

14. A method of making a laminated packaging material as claimed in any one of Claims 1 to 13, comprising lamination of a bulk layer, the barrier material, an outermost layer and an innermost layer.

15. A method as claimed in Claim 14, comprising the following steps in any order:
(L) lamination of the bulk layer to the barrier material (or part thereof)
(I) application of the innermost layer
(D) application of the outermost layer.

16. A method as claimed in Claim 15, further comprising formation of the barrier material.

17. A method as claimed in Claim 16, wherein formation of the barrier material comprises providing the barrier substrate layer with one or more of the pre-coating layer, the vapour-deposited metal layer, the optionally reduced graphene oxide layer and the reducing layer.

18. A method of forming a packaging container from a laminated packaging material as claimed in any one of Claims 1 to 13, comprising formation of at least one heat seal, preferably an induction heat seal.

19. A method as claimed in Claim 18, comprising formation of at least one longitudinal and/or transverse seal.

20. A method as claimed in Claim 18 or Claim 19, wherein the induction heating sealing frequency is 6.78 MHz or 13.56 MHz.

21. A packaging container comprising a main body of a laminated packaging material as claimed in any one of Claims 1 to 13, and comprising at least one heat seal.
